(19)

(11) EP 2 653 516 B1

(12) **EUROPEAN PATENT SPECIFICATION**

(45) Date of publication and mention of the grant of the patent: **29.06.2016 Bulletin 2016/26**

(51) Int Cl.: ***C09J 7/02*** *(2006.01)*

(21) Application number: **13163443.8**

(22) Date of filing: **12.04.2013**

(54) **PRESSURE-SENSITIVE ADHESIVE SHEET AND PRESSURE-SENSITIVE ADHESIVE COMPOSITION**

DRUCKEMPFINDLICHE HAFTFOLIE UND DRUCKEMPFINDLICHE HAFTZUSAMMENSETZUNG

FEUILLE ADHÉSIVE SENSIBLE À LA PRESSION ET COMPOSITION ADHÉSIVE SENSIBLE À LA PRESSION

(84) Designated Contracting States: **AL AT BE BG CH CY CZ DE DK EE ES FI FR GB GR HR HU IE IS IT LI LT LU LV MC MK MT NL NO PL PT RO RS SE SI SK SM TR**

(30) Priority: **16.04.2012 JP 2012093232**

(43) Date of publication of application: **23.10.2013 Bulletin 2013/43**

(73) Proprietor: **NITTO DENKO CORPORATION Ibaraki-shi, Osaka 567-8680 (JP)**

(72) Inventors:
- **Ogawa, Takuma Osaka 567-8680 (JP)**
- **Yamanaka, Eiji Osaka 567-8680 (JP)**
- **Higuchi, Naoaki Osaka 567-8680 (JP)**
- **Inokuchi, Shinji Osaka 567-8680 (JP)**

(74) Representative: **Grünecker Patent- und Rechtsanwälte PartG mbB Leopoldstraße 4 80802 München (DE)**

(56) References cited:
**EP-A1- 0 303 430**
**EP-A1- 2 072 594**
**EP-A1- 2 345 708**
**WO-A1-02/50209**
**US-A1- 2009 277 562**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 653 516 B1

## Description

The present invention relates to a pressure-sensitive adhesive sheet and a pressure-sensitive adhesive composition.

Because acrylic pressure-sensitive adhesive sheets including acrylic pressure-sensitive adhesive tapes (see, for example, Patent Document 1) are excellent in adhesiveness, such as pressure-sensitive adhesive force, resistance to resilience, and holding property (cohesive force), and further excellent in aging resistance, such as heat resistance, light resistance, weatherability, and oil resistance, the acrylic pressure-sensitive adhesive sheets have been conventionally used in wide applications. In particular, the pressure-sensitive adhesive sheets having such properties are widely used as joint materials between members in various industrial fields, such as machine parts, electric appliances, building materials, and automobile interior and exterior materials.

EP 2 345 708 discloses a pressure-sensitive adhesive tape having a pressure-sensitive adhesive layer containing fine particles and bubbles, said tape having a modulus at 100% of 13 $N/cm^2$ or more.

[Patent Document 1] Japanese Patent Publication No. 1982-17030

In joining the aforementioned members, there are sometimes the cases where, to adjust the positions of the members joined together after the pressure-sensitive adhesive sheet is to be once released, work for attaching them again (rework) is to be performed. Accordingly, the pressure-sensitive adhesive sheets are required to have high adhesiveness, and on the other hand, sometimes required to be able to be easily released from an adherend without a damage and deformation of the sheet after being attached to the adherend (hereinafter, this property is referred to as "reworkability").

The present invention has been made in view of such a challenge, and a purpose of the invention is to provide both a pressure-sensitive adhesive sheet having adhesiveness and reworkability and a pressure-sensitive adhesive composition for forming the pressure-sensitive adhesive sheet.

The above objects are achieved by the pressure-sensitive adhesive sheet of appended claim 1 and the pressure-sensitive adhesive composition of appended claim 3. A preferred embodiment of the pressure-sensitive adhesive sheet of the present invention is set forth in dependent claim 2.

Embodiments will now be described, by way of example only, with reference to the accompanying drawing which is meant to be exemplary, not limiting, in which:

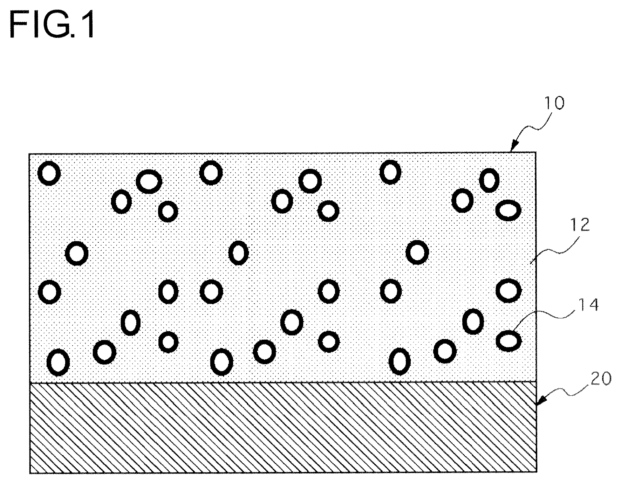

Fig. 1 is a schematic sectional view illustrating the structure of a pressure-sensitive adhesive sheet according to an embodiment.

A pressure-sensitive adhesive sheet 10 according to the present embodiment has a pressure-sensitive adhesive layer 12 formed by a pressure-sensitive adhesive composition including an acrylic polymer. The acrylic polymer included in this pressure-sensitive adhesive composition contains, as monomer components, an acrylic monomer not containing a polar group (A) and a polar group-containing monomer (B). Hereinafter, each of the monomer components of the acrylic polymer will be described in detail.

[Acrylic Monomer Not Containing Polar Group (A)] The acrylic monomer not containing a polar group (A) is an acrylic monomer not having a polar group, and is a (meth)acrylic acid ester. Herein, the (meth)acrylic acid ester means an acrylic acid ester and/or a methacrylic acid ester, and all of the "(meth)..." expressions have the same meaning. The (meth)acrylic acid ester is selected from a (meth)acrylic acid alkyl ester, a (meth)acrylic acid ester having an alicyclic hydrocarbon group, a (meth)acrylic acid ester having an aromatic hydrocarbon group, and a (meth)acrylic acid ester obtained from an alcohol derived from a terpene compound. Examples of the (meth)acrylic acid alkyl ester include: (meth) acrylic acid $C_{1-20}$ alkyl esters, [preferably (meth) acrylic acid $C_{2-14}$ alkyl esters, and more preferably (meth) acrylic acid $C_{2-10}$ alkyl esters], such as (meth)acrylic acid methyl, (meth)acrylic acid ethyl, (meth)acrylic acid propyl, (meth)acrylic acid isopropyl, (meth)acrylic acid butyl, (meth)acrylic acid isobutyl, (meth)acrylic acid s-butyl, (meth)acrylic acid t-butyl, (meth)acrylic acid pentyl, (meth)acrylic acid isopentyl, (meth)acrylic acid hexyl, (meth)acrylic acid heptyl, (meth)acrylic acid octyl, (meth)acrylic acid 2-ethylhexyl, (meth)acrylic acid isooctyl, (meth)acrylic acid nonyl, (meth)acrylic acid isononyl, (meth)acrylic acid decyl, (meth)acrylic acid isodecyl, (meth)acrylic acid undecyl, (meth)acrylic acid dodecyl, (meth)acrylic acid tridecyl, (meth)acrylic acid tetradecyl, (meth)acrylic acid pentadecyl, (meth)acrylic acid hexadecyl, (meth)acrylic acid heptadecyl, (meth)acrylic acid octadecyl, (meth)acrylic acid nonadecyl, and (meth)acrylic acid eicosyl. The (meth) acrylic acid esters may be used alone or in combination of two or more thereof.

The (meth) acrylic acid esters other than the (meth)acrylic acid alkyl esters are: (meth) acrylic acid alkyl esters having an alicyclic hydrocarbon group, such as cyclopentyl(meth)acrylate, cyclohexyl(meth)acrylate, and isobornyl(meth)acrylate; (meth) acrylic acid esters having an aromatic hydrocarbon group, such as benzyl(meth)acrylate; and (meth)acrylic acid esters obtained from an alcohol derived from a terpene compound.

The content of the acrylic acid monomer not containing a polar group (A) is preferably 70 to 95 parts by mass (70 parts by mass or more and 95 parts by mass or less), more preferably 75 to 93 parts by mass, and still more preferably 80 to 90 parts by mass, based on 100 parts by mass of the whole monomer components for forming the acrylic polymer.

[Polar Group-Containing Monomer (B)]

The polar group-containing monomer (B) has a polar group, and is a monomer to be copolymerizable with the acrylic monomer (A). The adhesiveness of the pressure-sensitive adhesive sheet 10 can be improved by using the polar group-containing monomer (B) as a monomer component of the acrylic polymer.

The polar group-containing monomer (B) is selected from carboxyl group-containing monomers, such as (meth) acrylic acid, itaconic acid, maleic acid, fumaric acid, crotonic acid, and isocrotonic acid, and anhydrides thereof (e.g., maleic anhydride) ; hydroxyl group-containing monomers, such as (meth)acrylic acid hydroxyalkyls including (meth)acrylic acid hydroxyethyl, (meth)acrylic acid hydroxypropyl, and (meth)acrylic acid hydroxybutyl; amido-group containing monomers, such as acrylamide, methacrylamide, N,N-dimethyl(meth)acrylamide, N-methylol(meth)acrylamide, N-methoxymethyl(meth)acrylamide, and N-butoxymethyl(meth)acrylamide; amino group-containing monomers, such as (meth)acrylic acid aminoethyl, (meth)acrylic acid dimethylaminoethyl, and (meth)acrylic acid t-butylaminoethyl; glycidyl group-containing monomers, such as (meth)acrylic acid glycidyl and (meth)acrylic acid methylglycidyl; cyano group-containing monomers, such as acrylonitrile and methacrylonitrile; and heterocycle-containing vinyl monomers, such as N-vinyl-2-pyrrolidone, (meth)acryloyl morpholine, N-vinylpyridine, N-vinylpiperidon, N-vinylpyrimidine, N-vinylpiperazine, N-vinylpyrazine, N-vinylpyrrole, N-vinylimidazole, and N-vinyloxazole. As the polar group-containing monomer (B), carboxyl group-containing monomers are preferable, and among them, an acrylic acid is particularly preferable. The polar group-containing monomers (B) may be used alone or in combination of two or more thereof.

The content of the polar group-containing monomer (B) is preferably 5 to 30 parts by mass, more preferably 10 to 20 parts by mass, and still more preferably 12 to 18 parts by mass, based on 100 parts by mass of the whole monomer components for forming the acrylic polymer. By making the content of the polar group-containing monomer (B) to be 5 parts by mass or more, based on 100 parts by mass of the whole monomer components, the cohesive force of the pressure-sensitive adhesive layer 12 can be enhanced, thereby allowing the adhesiveness of the pressure-sensitive adhesive sheet 10 to an adherend to be enhanced. In addition, by making the content of the polar group-containing monomer (B) to be 30 parts by mass or less, based on 100 parts by mass of the whole monomer components, the cohesive force of the pressure-sensitive adhesive layer 12 can be prevented from being too large more properly.

[Other Monomer Components]

The acrylic polymer may also contain, as other monomer components, various copolymerizable monomers, such as a polyfunctional monomer. The cohesive force of the pressure-sensitive adhesive layer 12 can be enhanced by using, for example, a polyfunctional monomer as a monomer component. The polyfunctional monomer can be used as a cross-linking agent.

Examples of the polyfunctional monomer include, for example: hexanediol di(meth)acrylate, (poly)ethylene glycol di(meth)acrylate, (poly)propylene glycol di(meth)acrylate, neopentyl glycol di(meth)acrylate,pentaerythritol di(meth)acrylate, pentaerythritol tri(meth)acrylate, dipentaerythritol hexa(meth)acrylate, trimethylolpropane tri(meth)acrylate, tetramethylol methane tri(meth)acrylate, allyl(meth)acrylate, vinyl(meth)acrylate, divinylbenzene, epoxy acrylate, polyester acrylate, urethane acrylate, butanediol di(meth)acrylate, and hexanediol di(meth)acrylate . The polyfunctional monomers may be used alone or in combination of two or more thereof.

The content of the polyfunctional monomer is preferably 0.01 to 2 parts by mass, and more preferably 0.02 to 1 part by mass, based on 100 parts by mass of the whole monomer components for forming the acrylic polymer.

Examples of copolymerizable monomers other than the polyfunctional monomer include, for example: vinyl esters, such as vinyl acetate and vinyl propionate; aromatic vinyl compounds, such as styrene and vinyl toluene; olefins or dienes, such as ethylene, butadiene, isoprene, and isobutylene; vinyl ethers, such as vinyl alkyl ether; vinyl chloride; (meth)acrylic acid alkoxy alkyl monomers, such as (meth)acrylic acid methoxyethyl and (meth)acrylic acid ethoxyethyl; sulfonate group-containing monomers, such as vinyl sulfonate sodium; phosphate group-containing monomers, such as 2-hydroxyethyl acryloyl phosphate; imide group-containing monomers, such as cyclohexyl maleimide and isopropyl maleimide; isocyanate group-containing monomers, such as 2-methacryloyloxyethyl isocyanate; fluorine atom-containing (meth)acrylate; and silicon atom-containing (meth)acrylate.

The pressure-sensitive adhesive composition may contain, as other components other than the acrylic polymer, a polymerization initiator, cross-linking agent, which will be described below.

[Polymerization Initiator]

The aforementioned acrylic polymer can be prepared by a publicly-known or commonly-used polymerization method. Examples of the polymerization method include, for example, a solution polymerization method, emulsion polymerization method, bulk polymerization method, and photo-polymerization method. In preparing the acrylic polymer, it is particularly preferable to use a thermal polymerization initiator or a photo-polymerization initiator to utilize a curing reaction by heat or an activated energy ray from the viewpoint of workability, etc. It is more preferable to use a photo-polymerization initiator from the advantage that a polymerization time can be shortened. Accordingly, a photo-polymerization initiator is contained in the pressure-sensitive adhesive composition according to the present embodiment. The polymerization initiators may be used alone or in combination of two or more thereof.

The photo-polymerization initiator is not particularly limited, but, for example, a benzoin ether photo-polymerization initiator, acetophenone photo-polymerization initiator, α-ketol photo-polymerization initiator, aromatic sulfonyl chloride photo-polymerization initiator, photoactive oxime photo-polymerization initiator, benzoin photo-polymerization initiator, benzyl photo-polymerization initiator, benzophenone photo-polymerization initiator, ketal photo-polymerization initiator, thioxanthone photo-polymerization initiator, and acylphosphine oxide photo-polymerization initiator can be used.

Specific examples of the benzoin ether photo-polymerization initiator include, for example, benzoin methyl ether, benzoin ethyl ether, benzoin propyl ether, benzoin isopropyl ether, benzoin isobutyl ether, 2,2-dimethoxy-1,2-diphenylethane-1-one (product name: "IRGACURE 651", made by BASF), and Anisoin. Specific examples of the acetophenone photo-polymerization initiator include, for example, 2,2-diethoxyacetophenone, 2,2-dimethoxy-2-phenylacetophenone, 1-hydroxycyclohexyl phenyl ketone (product name "IRGACURE 184", made by BASF), 4-phenoxy dichloroacetophenone, 4-t-butyl-dichloroacetophenone, 1-[4-(2-hydroxyethoxy)-phenyl]-2-hydroxy-2-methyl-1-propane-1 -one (product name "IRGACURE 2959", made by BASF), 2-hydroxy-2-methyl-1-phenyl-propane-1-one (product name "DAROCUR 1173", made by BASF), and methoxy acetophenone. Specific examples of α-ketol photo-polymerization initiator include, for example, 2-methyl-2-hydroxy propiophenone and 1-[4-(2-hydroxyethyl)-phenyl]-2-hydroxy-2-methylpropane-1-one, etc. Specific examples of the aromatic sulfonyl chloride photo-polymerization initiator include, for example, 2-naphthalene sulfonyl chloride. Specific examples of the photoactive oxime photo-polymerization initiator include, for example, 1-phenyl-1,2-propanedione-2-(O-ethoxycarbonyl)oxime.

Specific examples of the benzoin photo-polymerization initiator include, for example, benzoin . Specific examples of the benzyl photo-polymerization initiator include, for example, benzyl. Specific examples of the benzophenone photo-polymerization initiators include, for example, benzophenone, benzoylbenzoic acid, 3,3'-dimethyl-4-methoxybenzophenone, polyvinyl benzophenone, and α-hydroxy cyclohexyl phenyl ketone. Specific examples of the ketal photo-polymerization initiator include, for example, benzyl dimethyl ketal. Specific examples of the thioxanthone photo-polymerization initiator include, for example; thioxanthone, 2-chlorothioxanthone, 2-methyl thioxanthone, 2,4-dimethyl thioxanthone, isopropyl thioxanthone, 2,4-dichloro thioxanthone, 2,4-diethyl thioxanthone, 2,4-diisopropyl thioxanthone, and dodecyl thioxanthone.

Specific examples of the acylphosphine photo-polymerization initiator include, for example: bis(2,6-dimethoxybenzoyl)phenylphosphine oxide, bis(2,6-dimethoxybenzoyl)(2,4,4-trimethylpentyl)phosphine oxide, bis(2,6-dimethoxybenzoyl)-n-butyl phosphine oxide, bis(2,6-dimethoxybenzoyl)-(2-methylpropane-1-yl)phosphine oxide, bis(2,6-dimethoxybenzoyl)-(1-methylpropane-1-yl)phosphine oxide, bis(2,6-dimethoxybenzoyl)-t-butylphosphine oxide, bis(2,6-dimethoxybenzoyl)cyclohexylphosphine oxide, bis(2,6-dimethoxybenzoyl)octylphosphine oxide, bis(2-methoxybenzoyl)(2-methylpropane-1-yl)phosphine oxide, bis(2-methoxybenzoyl)(1-methylpropane-1-yl)phosphine oxide, bis(2,6-diethoxybenzoyl)(2-methylpropane-1-yl)phosphine oxide, bis(2,6-diethoxybenzoyl)(1-methylpropane-1-yl)phosphine oxide, bis(2,6-dibutoxybenzoyl)(2-methylpropane-1-yl)phosphine oxide, bis(2,4-dimethoxybenzoyl)(2-methypropane-1-yl)phosphine oxide, bis(2,4,6-trimethylbenzoyl)(2,4-dipentoxyphenyl)phosphine oxide, bis(2,6-dimethoxybenzoyl)benzyl phosphine oxide, bis(2,6-dimethoxybenzoyl)-2-phenylpropyl phosphine oxide, bis(2,6-dimethoxybenzoyl)-2-phenylethyl phosphine oxide, bis(2,6-dimethoxybenzoyl)benzyl phosphine oxide, bis(2,6-dimethoxybenzoyl)-2-phenylpropyl phosphine oxide, bis(2,6-dimethoxybenzoyl)-2-phenylethyl phosphine oxide, 2,6-dimethoxybenzoyl benzylbutylphosphine oxide, 2,6-dimethoxybenzoyl benzyloctylphosphine oxide, bis(2,4,6-trimethylbenzoyl)-2,5-diisopropylphenylphosphine oxide, bis(2,4,6-trimethylbenzoyl)-2-methylphenylphosphine oxide, bis(2,4,6-trimethylbenzoyl)-4-methylphenylphosphine oxide, bis(2,4,6-trimethylbenzoyl)-2,5-diethylphenylphosphine oxide, bis(2,4,6-trimethylbenzoyl)-2,3,5,6-tetramethylphenylphosphin e oxide, bis(2,4,6-trimethyl benzoyl)-2,4-di-n-butoxy phenylphosphine oxide, 2,4,6-trimethylbenzoyl diphenylphosphine oxide, bis(2,6-dimethoxybenzoyl)-2,4,4-trimethylpentylphosphine oxide, bis(2,4,6-trimethylbenzoyl)isobutylphosphine oxide, 2,6-dimethoxybenzoyl-2,4,6-trimethylbenzoyl-n-butylphosphine oxide, bis(2,4,6-trimethylbenzoyl)phenylphosphine oxide, bis(2,4,6-trimethylbenzoyl)-2,4-dibutoxyphenylphosphine oxide, 1,10-bis[bis(2,4,6-trimethylbenzoyl)phosphine oxide]decane, and tri(2-methylbenzoyl)phosphine oxide.

The use amount of the photo-polymerization initiator is, for example, preferably 0.01 to 5 parts by mass, and more preferably 0.03 to 3 parts by mass, based on 100 parts by mass of the whole monomer components for forming the acrylic polymer. By making the use amount of the photo-polymerization initiator to be 0.01 parts by mass or more, based on 100 parts by mass of the whole monomer components, the polymerization reaction of the monomer can be developed more properly. By making the use amount of the photo-polymerization initiator to be 5 parts by mass or less, based on 100 parts by mass of the whole monomer components, a situation where an activated energy ray never reaches the inside of the pressure-sensitive adhesive layer 12, occurring because the photo-polymerization initiator absorbs the activated energy ray, can be avoided more properly. The photo-polymerization initiators may be used alone or in combination of two or more thereof.

Examples of an activated energy ray, which is to be radiated onto the pressure-sensitive adhesive composition for the activation of the photo-polymerization initiator, include, for example, ionizing radiation rays, such as an $\alpha$ ray, $\beta$ ray, $\gamma$ ray, neutron ray, and electron ray, and an ultraviolet ray. Among them, an ultraviolet ray is particularly and preferably used. The irradiation energy of the activated energy ray and an irradiation time thereof are not particularly limited, but are only required to activate the photo-polymerization initiator such that a reaction among the monomer components is generated. By polymerizing the monomer components with the action of the activated energy ray, swift and uniform polymerization can be achieved, thereby allowing the efficiency in manufacturing the pressure-sensitive adhesive sheet 10 to be improved.

Examples of the thermal polymerization initiator include, for example: azo polymerization initiators, such as 2,2'-azobisisobutyronitrile, 2,2'-azobis-2-methylbutyronitrile, 2,2'-azobis(2-methylpropionic acid)dimethyl, 4,4'-azobis-4-cyanovalerianic acid, azobis isovaleronitrile, 2,2'-azobis(2-amidinopropane)dihydrochloride, 2,2'-azobis[2-(5-methyl-2-imidazoline-2-yl) propane]dihydrochloride, 2,2'-azobis(2-methylpropionamidine)disulfate, and 2,2'-azobis(N,N'-dimethyleneisobutylamidine)dihydrochloride, etc.; peroxide polymerization initiators, such as dibenzoyl peroxide, and tert-butyl permaleate; and redox polymerization initiators. The use amount of the thermal polymerization initiator is not particularly limited, but only required to be within a range in which it can be used as a thermal polymerization initiator.

(Cross-Linking Agent)

The pressure-sensitive adhesive composition may contain a cross-linking agent other than the aforementioned polyfunctional monomers. A commonly-used cross-linking agent can be used as the cross-linking agent. Examples of the cross-linking agent include, for example: an epoxy cross-linking agent, isocyanate cross-linking agent, silicone cross-linking agent, oxazoline cross-linking agent, aziridine cross-linking agent, silane cross-linking gent, alkyl-etherified melamine cross-linking agent, and metal chelate cross-linking agent. Among them, an isocyanate cross-linking agent and epoxy cross-linking agent can be particularly and preferably used.

Examples of the isocyanate cross-linking agent include tolylene diisocyanate, hexamethylene diisocyanate, isophorone diisocyanate, xylylene diisocyanate, hydrogenated xylylene diisocyanate, diphenylmethane diisocyanate, hydrogenated diphenylmethane diisocyanate, tetramethyl xylylene diisocyanate, naphthalene diisocyanate, triphenylmethane triisocyanate, polymethylene polyphenyl isocyanate, and these adducts with polyols, such as trimethylolpropane. Alternatively, a compound having, in one molecule, at least one isocyanate group and one or more unsaturated bonds, specifically 2-isocyanate ethyl(meth)acrylate can also be used as the isocyanate cross-linking agent.

Examples of the epoxy cross-linking agent include: bisphenol A, epichlorohydrin type epoxy resin, ethyleneglycidylether, polyethylene glycol diglycidyl ether, glycerin diglycidyl ether, glycerin triglycidyl ether, 1,6-hexanediol glycidyl ether, trimethylolpropane triglycidyl ether, diglycidyl aniline, diamine glycidyl amine, N,N,N',N'-tetraglycidyl-m-xylylenediamine, and 1,3-bis(N,N-amine glycidyl aminomethyl)cyclohexane.

(Fine Particle)

In the present invention, the pressure-sensitive adhesive composition that forms the pressure-sensitive adhesive layer 12 contains a fine particle 14. By containing the fine particle 14 in the pressure-sensitive adhesive composition, 100% modulus of the pressure-sensitive adhesive layer 12 can be enhanced, thereby allowing reworkability to be improved. The content of the fine particle 14 is preferably 5 to 20 parts by mass, more preferably 10 to 18 parts by mass, and still more preferably 13 to 16 parts by mass, based on 100 parts by mass of the whole monomer components for forming the acrylic polymer. By making the content of the fine particle 14 to be 5 parts by mass or more, based on 100 parts by mass of the whole monomer components, the 100% modulus of the pressure-sensitive adhesive layer 12 can be enhanced more properly. In addition, by making the content of the fine particle 14 to be 20 parts by mass or less, based on 100 parts by mass of the whole monomer components, concavities and convexities, occurring between the pressure-sensitive adhesive layer 12 and an adherend, can be more successfully decreased, thereby allowing a decrease in the adhesiveness of the pressure-sensitive adhesive sheet 10, occurring due to a decrease in the adhesive area, to be suppressed.

A method of containing the fine particle 14 in the pressure-sensitive adhesive composition is not particularly limited, but, for example, a method of blending and mixing the fine particle 14 in the pressure-sensitive adhesive composition after the composition has been formed, can be used. As another method, a method can be used, in which the fine particle 14 is blended and mixed in a mixture of the monomer components for forming the acrylic polymer or in a partially-polymerized substance in which part of the monomer components have been polymerized. Of these methods, the method in which the fine particle 14 is blended and mixed in a mixture of the monomer components or in a partially-polymerized substance in which part of the monomer components have been polymerized, is preferably used from the viewpoint of workability.

Examples of the fine particle 14 include: metallic particles made of copper, nickel, aluminum, chromium, iron, or stainless steel, and metal oxide particles made of them; carbide particles made of silicon carbide, boron carbide, or carbon nitride; nitride particles made of aluminum nitride, silicon nitride, or boron nitride; ceramic particles represented by oxides, such as alumina and zirconium; inorganic fine particles made of calcium carbide, aluminum hydroxide, glass, or silica; natural material particles, such as volcanic Shirasu and sand; polymer particles made of polystyrene, polymethyl methacrylate, phenol resin, benzoguanamine resin, urea resin, silicone resin, nylon, polyester, polyurethane, polyethylene, polypropylene, polyamide, or polyimide; organic hollow bodies made of vinylidene chloride, of acrylic and organic spheres, such as nylon bead, acrylic bead, and silicone bead.

A hollow fine particle can be preferably used as the fine particle 14. Among the hollow fine particles, a hollow inorganic fine particle can be preferably used from the viewpoints of an efficiency of the polymerization using an ultraviolet reaction and weight. Examples of the hollow inorganic fine particle include: glass hollow balloons, such as hollow glass balloons; hollow balloons made of a metallic compound, such as hollow alumina balloons; and hollow balloons made of porcelain, such as hollow ceramic balloons. Examples of the hollow glass balloon include, for example, ones: with product names of "FUJI Balloon H-35" and "HUJI Balloon H-40" (made by FUJI SILYSIA CHEMICAL LTD.) ; with product names of "CEL-STAR Z-20", "CEL-STAR Z-27", "CEL-STAR CZ-31T", "CEL-STAR Z-36", "CEL-STAR Z-39", "CEL-STAR T-36", and "CEL-STAR PZ-6000" (each of which is made by Tokai Kogyo Co. , Ltd.) ; and with a product name of "SILUX FINE BALLOON" (made by FINE-BALLOON Ltd.).

The grain size (average particle size) of the fine particle 14 is 1 to 500 micrometer, preferably 5 to 200 micrometer, and more preferably 10 to 150 micrometer. A method of measuring the average particle size of the fine particle 14 is as follows. That is, a particle size distribution is first measured by using a Coulter particle size measuring apparatus (laser diffractometry). Subsequently, an average particle size is calculated from the volume frequency distribution determined by the measurement.

The specific gravity of the fine particle 14 is not particularly limited, but is, for example, 0.1 to 1.0 g/cm$^3$, preferably 0. 2 to 0.8 g/cm$^3$, and more preferably 0.2 to 0.5 g/cm$^3$. By making the specific gravity of the fine particle 14 to be 0.1 g/cm$^3$ or more, the floating of the fine particle 14 can be prevented more successfully, when the fine particle 14 is blended and mixed in the pressure-sensitive adhesive composition, thereby allowing the fine particles 14 to be uniformly dispersed. Further, the strength of the fine particle 14 can be maintained, and hence it becomes possible that the fine particle 14 is more resistant to breakage . In addition, by making the specific gravity of the fine particle 14 to be 1,0 g/cm$^3$ or less, a decrease in the efficiency of an ultraviolet-ray reaction can be more successfully suppressed by maintaining the transmittance of an ultraviolet ray. Further, an increase in the mass of the pressure-sensitive adhesive sheet 10 can be suppressed. A method of measuring the specific gravity of the fine particle 14 is as follows. That is, a true specific gravity is first measured by a gas phase substitution method with the use of a Penta-Pycnometer. A gas is enclosed as a substitution medium and the volume of a sample is calculated from the gas equation. A specific gravity $\delta$ is calculated from the measured volume "a" and a weight "b" measured with an electronic balance, as shown in the following equation (1) :

$$\text{Specific gravity } \delta = b\ [g]/a\ [cm^3] \quad \text{...Equation (1)}$$

Herein, various surface treatments may be performed on the surface of the fine particle 14. Examples of the surface treatment include, for example, a low surface tension treatment by a silicone compound, or a fluorine compound.

(Bubble)

The content of a bubble in the pressure-sensitive adhesive composition is 10% by volume or less, based on the whole volume of the pressure-sensitive adhesive composition, more preferably less than 5% by volume, still more preferably 3% by volume or less, and most preferably 0% by volume, i.e., the composition never contains a bubble. By making the content of a bubble to be 10% by volume or less, based on the whole volume of the pressure-sensitive adhesive composition, the 100% modulus of the pressure-sensitive adhesive layer 12 can be more enhanced. Further, it can be reduced that a bubble penetrating the pressure-sensitive adhesive layer 12 between both the surfaces thereof may be present, thereby allowing a decrease in the adhesiveness or the appearance of the pressure-sensitive adhesive sheet 10 to be suppressed.

The average bubble size (diameter) of the bubble is, for example, 1 to 1000 micrometer, preferably 10 to 500 micrometer, and more preferably 30 to 300 micrometer. Herein, the average bubble size (diameter) of the bubble can be measured from an image of the cross section of a tape sample, the image being obtained with an electron microscope. A gas component contained in the bubble, i.e., a gas for forming the bubble, is not particularly limited, but various gas components, such as inert gases including nitrogen, carbon dioxide, and argon, and air, are used. When a reaction, such as a polymerization reaction, is performed after a gas component is mixed with the acrylic pressure-sensitive adhesive composition, it is preferable that the gas component does not impair the reaction. As a gas for forming the bubble, nitrogen is preferable from the viewpoints of not impairing a reaction and cost.

(Other Additives)

In addition to the acrylic polymer, polymerization initiator, cross-linking agent, fine particle 14, and bubble, various additives may be appropriately contained in the pressure-sensitive adhesive composition in accordance with the applications of the pressure-sensitive adhesive sheet 10. Examples of such additives include, for example: a surfactant, tackifier (which is a solid, semi-solid, or liquid at normal temperature, made, for example, of a rosin derivative resin, polyterpene resin, petroleum resin, or oil-soluble phenol resin) , plasticizer, filler other than the aforementioned fine particle 14, ariti-aging agent, antioxidant, colorants (e.g., pigment or dye), leveling agent, stabilizer, and antiseptic.

For example, a colorant can be contained in the pressure-sensitive adhesive composition to color the pressure-sensitive adhesive layer 12. When the pressure-sensitive adhesive layer 12 is formed by using a photo-polymerization initiator, a colorant that hardly hinders the photo-polymerization is used. When black is desired as the color of the pressure-sensitive adhesive layer 12, for example, carbon black can be used. For example, the use amount of carbon black is preferably 0.15 parts by mass or less (e.g., 0.001 to 0.15 parts by mass), and more preferably 0.01 to 0.1 parts by mass, based on 100 parts by mass of the pressure-sensitive adhesive composition, from the viewpoints of a coloring degree and avoidance of a hindrance on the photo-polymerization.

[100% Modulus of Pressure-Sensitive Adhesive Layer]

The 100% modulus of the pressure-sensitive adhesive layer 12 in the pressure-sensitive adhesive sheet 10 according to the present embodiment is 20 to 200 N/cm$^2$, preferably 23 to 180 N/cm$^2$, more preferably 31 to 170 N/cm$^2$, and still more preferably 40 to 140 N/cm$^2$. By making the 100% modulus of the pressure-sensitive adhesive layer 12 to be 20 N/cm$^2$ or more, it becomes possible to provide appropriate hardness to the pressure-sensitive adhesive sheet 10, thereby allowing the sheet 10 to have good reworkability. In addition, by making the 100% modulus of the pressure-sensitive adhesive layer 12 to be 200 N/cm$^2$ or less, it becomes possible to more successfully suppress a decrease in the followability of the pressure-sensitive adhesive sheet 10 to an adherend, thereby allowing a decrease in the adhesiveness of the sheet 10 to be more successfully suppressed.

The 100% modulus of the pressure-sensitive adhesive layer 12 can be adjusted to be within a desired range by adjusting at least one of the contents of the aforementioned cross-linking agent, fine particle 14, and bubble.

[Outline of Manufacturing Method]

The acrylic polymer can be prepared as a partial polymer (hereinafter, appropriately referred to as a "partially-polymerized monomer syrup") in which part of the monomer components for forming the acrylic polymer are partially polymerized by performing, in accordance with the type of a polymerization initiator, a polymerization reaction (e.g., emission of UV light) on a monomer mixture in which the monomer components for forming the acrylic polymer and the polymerization initiator have been mixed together. Thereafter, a cross-linking agent, the fine particle 14, and various additives, if necessary, are blended in the partially-polymerized monomer syrup to prepare the pressure-sensitive adhesive composition. The pressure-sensitive adhesive composition is coated on a predetermined object to be coated and the polymerization reaction is completed, thereby allowing the pressure-sensitive adhesive layer 12 to be formed. The object to be coated may be an adherend itself, or the later-described separator. That is, the pressure-sensitive adhesive layer 12 may be directly coated on an adherend, or be once coated on the separator and cured. When the pressure-sensitive adhesive layer 12 is formed on the separator, this layer 12 will be transferred from the separator onto an adherend.

The coating of the pressure-sensitive adhesive composition can be performed by using a commonly-used coater, such as, for example, a gravure roll coater, reverse roll coater, kiss roll coater, dip roll coater, bar coater, knife coater, or spray coater.

The weight average molecular weight (Mw) of the acrylic polymer is, for example, 30000 to 5000000. The weight average molecular weight of the acrylic polymer can be determined by polystyrene conversion using GPC. Specifically, the weight average molecular weight can be measured by using a measuring apparatus (product name "HPLC8020", made by Tosoh Corporation) and two TSKgel GMH-Hs (20) as columns, under a condition in which a tetrahydrofuran solvent is used and a flow rate is approximately 0.5 ml/min.

The pressure-sensitive adhesive layer 12 may be one of a single-layer form and a multiple-layer form. The thickness of the pressure-sensitive adhesive layer 12 (in the case of a multiple-layer form, the total thickness thereof) is preferably 200 to 5000 micrometer, more preferably 400 to 4000 micrometer, and still more preferably 600 to 3000 micrometer. By making the thickness of the pressure-sensitive adhesive layer 12 to be 200 micrometer or more, the cushioning property of the pressure-sensitive adhesive sheet 10 can be secured, thereby allowing a decrease in the adhesiveness to a curved surface or a concave-convex surface to be more successfully suppressed. Further, the strength of the pressure-sensitive adhesive layer itself can be maintained, and hence the reworkability of the pressure-sensitive adhesive sheet 10 can be improved. By making the thickness of the pressure-sensitive adhesive layer 12 to be 5000 micrometer or less, the layer 12 can be easily formed so as to have a more uniform thickness.

[Separator]

In the present embodiment, a separator 20 (release liner) is used to protect the adhesive surface (pressure-sensitive adhesive surface) of the pressure-sensitive adhesive sheet 10. The pressure-sensitive adhesive sheet 10 has a form in which the separator 20 is superimposed on one surface of the pressure-sensitive adhesive layer 12 and they are wound in a roll shape. That is, the pressure-sensitive adhesive sheet 10 according to the present embodiment has a so-called substrate-less pressure-sensitive adhesive sheet form in which the pressure-sensitive adhesive layer 12 is provided on the separator 20 such that a substrate for supporting the pressure-sensitive adhesive layer 12 is removed when the sheet 10 is attached. The concept of the pressure-sensitive adhesive sheet described herein can involve objects referred to as a pressure-sensitive adhesive tape, pressure-sensitive adhesive label, and pressure-sensitive adhesive film. The pressure-sensitive adhesive layer 12 should not be limited to one continuously formed, but may be one formed into a regular pattern, such as, for example, a dot shape and a stripe shape, or one formed into a random pattern. The form of the pressure-sensitive adhesive sheet 10 is not particularly limited, but may have a form of a laminated body. The separator 20 is not necessarily required to be provided.

Commonly-used releasing paper can be used as the separator 20. Specifically, for example, a substrate having a release-treated layer, which is formed by a releasing agent, on at least one surface thereof; a low-adhesive substrate made of a fluorine polymer, such as polytetrafluoroethylene, polychlorotrifluoroethylene, polyvinyl fluoride, polyvinylidene fluoride, tetrafluoroethylene-hexafluoropropylene copolymer, or chlorofluoroethylene-vinylidene fluoride copolymer; and a low-adhesive substrate made of a non-polar polymer, such as olefin resins including polyethylene and polypropylene can be used as the separator 20. The separator 20 can be used as a substrate for supporting the pressure-sensitive adhesive layer 12. F4993EP(NIT-70039EP)

When a substrate for a release liner, having a release-treated layer formed on one surface thereof, is used as the separator 20, a polyester film, such as a polyethylene terephthalate film; an olefin resin film, such as a polyethylene film, or polypropylene film; a plastic substrate film (synthetic resin film), such as a polyvinylchloride film, polyimide film, polyamide film (nylon film), or rayon film; paper (high-quality paper, Japanese paper, craft paper, glassine paper, synthetic paper, or top coat paper); and a multi-laminated body (laminated body having a few layers) formed by lamination, or co-extrusion can be used as such the substrate for a release liner.

On the other hand, the releasing agent for forming the release-treated layer is not particularly limited, but, for example, a silicone releasing agent, fluorine releasing agent,or long-chain alkyl releasing agent can be used. These releasing agents can be used alone or in combination of two or more thereof. The thickness and a manufacturing method of the separator 20 are not particularly limited.

The pressure-sensitive adhesive sheet 10 according to the present embodiment can be preferably used in applications in which members made of the following materials are joined (fixed) to the surfaces of automobiles (coatings of the bodies), house and building materials, and home electronic appliances. The materials are, for example: various resins including PE (polyethylene), PP (polypropylene), ABS F4993EP(NIT-70039EP) (acrylonitrile-butadiene-styrene copolymer), SBS (styrene-butadiene-styrene block copolymer), PC (polycarbonate), PVC (vinyl chloride), and acrylic resins, such as PMMA (polymethyl methacrylate resin); and metals, such as SUS and aluminum.

The pressure-sensitive adhesive sheet 10 according to the present invention can be preferably used in applications in which various optical members are attached to, for example, liquid crystal cells, optical polyester films, and touch panel members. Accordingly, the technique disclosed herein involves a laminated body in which the pressure-sensitive adhesive layer 12 is provided in an optical member. This laminated body typically has an aspect in which the pressure-sensitive adhesive layer 12 on the optical member is protected by the separator 20. The optical member on which such the pressure-sensitive adhesive layer 12 is provided can be easily attached to the surfaces of plastic cover lens panels, glass, and liquid crystal cells. The optical member is not particularly limited, but can be a polarizing film, phase difference film, or a transparent conductive film (ITO film).

Such an optical member may have a single-layer structure made of the same material, or may have a multiple-layer structure made of a plurality of materials. As a method of forming the pressure-sensitive adhesive layer 12 on the optical member, a method of directly providing the layer 12 or a method of transferring the layer 12 can be appropriately adopted, in the same way as in the case where the pressure-sensitive adhesive layer 12 is formed on a substrate. Typically, the pressure-sensitive adhesive layer 12 formed on the separator 20 is transferred to the base surface of the optical member.

As described above, the pressure-sensitive adhesive sheet 10 according to the present invention comprises the pressure-sensitive adhesive layer 12 including an acrylic polymer, in which this acrylic polymer contains, as monomer components, an acrylic monomer not containing a polar group (A) and a polar group-containing monomer (B). Thereby, the pressure-sensitive adhesive sheet 10 is allowed to have good adhesiveness. The 100% modulus of the pressure-sensitive adhesive layer 12 is 20 to 200 N/cm$^2$. Thereby, the pressure-sensitive adhesive sheet 10 is allowed to have good reworkability without impairing adhesiveness. Accordingly, adhesiveness and reworkability can be both achieved in the pressure-sensitive adhesive sheet 10 according to the present invention. The pressure-sensitive adhesive composition according to the present invention includes an acrylic polymer containing, as monomer components, an acrylic monomer not containing a polar group (A) and a polar group-containing monomer (B). And, when a pressure-sensitive adhesive layer is formed, 100% modulus of the pressure-sensitive adhesive layer is 20 to 200 N/cm$^2$. Accordingly, a pressure-sensitive adhesive sheet, in which adhesiveness and reworkability are both achieved, can be manufactured by the pressure-sensitive adhesive composition according to the present invention.

Examples

Hereinafter, the present invention will be described in detail based on Examples.

[Formation of Pressure-Sensitive Adhesive Sheet]

(Example 1)

After 0.05 parts by mass of "IRGACURE 651" (made by BASF) and 0.05 parts by mass of "IRGACURE 184" (made by BASF), which serve as photo-polymerization initiators, were added to a monomer mixture in which 85 parts by mass of 2-ethylhexyl acrylate (2-EHA), as the acrylic monomer not containing a polar group (A), and 15 parts by mass of an acrylic acid (AA), as the polar group-containing monomer (B), had been mixed together as monomer components, they were irradiated with ultraviolet rays (UV) before the viscosity became approximately 15 Pa*s to produce a partially-polymerized monomer syrup in which part of the monomer components were polymerized. The viscosity was measured by using a BH viscometer under a condition in which the rotor was No. 5, the number of rotations was 10 rpm, and the measurement temperature was 30°C.

To this partially-polymerized monomer syrup, 0.15 parts by mass of dipentaerythritol hexaacrylate (DPHA) were added as a cross-linking agent. Further, 15 parts by mass of hollow glass balloons (average particle size 40 micrometer, product name "Fuji Balloon H-40", made by FUJI SILYSIA CHEMICAL LTD.) were added to obtain a pressure-sensitive adhesive composition of Example 1. This pressure-sensitive adhesive composition was coated on the release-treated surface of a separator. A polyethylene terephthalate substrate (product name "MRF", made by Mitsubishi Polyester Film, Inc., or product name "MRN", made by Mitsubishi Polyester Film, Inc.), one surface of which had been subjected to a release treatment, was used as the separator.

The pressure-sensitive adhesive composition coated on the separator was irradiated with ultraviolet rays with an illuminance of 5 mw/cm$^2$ (product name "black light", made by TOSHIBA CORPORATION) from both sides thereof for 3 minutes to cure the pressure-sensitive adhesive composition. Thereby, a pressure-sensitive adhesive sheet of Example 1, having a pressure-sensitive adhesive layer whose thickness was 1200 micrometer, was obtained. At the time, 0.04 parts by mass of "IRGACURE 651" (made by BASF) was added as a photo-polymerization initiator. The ultraviolet ray was measured by a UV checker (product name "UVR-T1", made by TOPCON CORPORATION, maximum sensitivity: 350 nm).

(Example 2)

A pressure-sensitive adhesive sheet of Example 2 was obtained by the same components and manufacturing method as those in Example 1, except that: the parts by mass of each of the 2-ethylhexyl acrylate and the acrylic acid were made to be 88 parts by mass and 12 parts by mass, respectively; the cross-linking agent and the parts by mass thereof were made to be 1, 6-hexanediol diacrylate (HDDA) and 0.2 parts by mass; and the parts by mass of the hollow glass balloon were made to be 12 parts by mass.

(Example 3)

A pressure-sensitive adhesive sheet of Example 3 was obtained by the same components and manufacturing method as those in Example 2, except that a bubble was mixed in the pressure-sensitive adhesive composition. The bubble was mixed in the following way. That is, an apparatus, including: a stator having many fine teeth placed on a disc with a through-hole at its center; and a rotor having teeth as fine as those of the stator, which is placed on the disc to face the stator, was provided as a bubble mixing apparatus. The pressure-sensitive adhesive composition, before being coated on the separator, was introduced between the teeth on the stator and those on the rotor.

Subsequently, nitrogen gas, as a bubble forming gas, was introduced into the pressure-sensitive adhesive composition through the through-hole, while the rotor was being made to rotate at a high-speed. Thereby, a pressure-sensitive adhesive composition of Example 3, in which bubbles were dispersed and mixed, was obtained. The bubbles were mixed such that the content thereof was approximately 3% by volume, based on the whole volume of the pressure-sensitive adhesive composition.

(Example 4)

A pressure-sensitive adhesive sheet of Example 4 was obtained by the same components and manufacturing method as those in Example 1, except that: the parts by mass of each of the 2-ethylhexyl acrylate and the acrylic acid were made to be 90 parts by mass and 10 parts by mass, respectively; the cross-linking agent and the parts by mass thereof were made to be 1, 6-hexanediol diacrylate (HDDA) and 0.07 parts by mass; and the parts by mass of the hollow glass balloon were made to be 9 parts by mass.

(Example 5)

A pressure-sensitive adhesive sheet of Example 5 was obtained by the same components and manufacturing method as those in Example 1, except that: the parts by mass of each of the 2-ethylhexyl acrylate and the acrylic acid were made to be 90 parts by mass and 10 parts by mass, respectively; the parts by mass of the cross-linking agent was made to be 0.1 parts by mass; and the parts by mass of the hollow glass balloon were made to be 9 parts by mass.

(Example 6)

A pressure-sensitive adhesive sheet of Example 6 was obtained by the same components and manufacturing method as those in Example 1, except that: the parts by mass of each of the 2-ethylhexyl acrylate and the acrylic acid were made to be 82 parts by mass and 18 parts by mass, respectively; the cross-linking agent and the parts by mass thereof were made to be 1, 6-hexanediol diacrylate (HDDA) and 0.07 parts by mass; and the parts by mass of the hollow glass balloon were made to be 9 parts by mass.

(Comparative Example 1)

A pressure-sensitive adhesive sheet of Comparative Example 1 was obtained by the same components and manufacturing method as those in Example 1, except that: the parts by mass of each of the 2-ethylhexyl acrylate and the acrylic acid were made to be 90 parts by mass and 10 parts by mass, respectively; the cross-linking agent and the parts by mass thereof were made to be 1,6-hexanediol diacrylate (HDDA) and 0.07 parts by mass; the parts by mass of the hollow glass balloon were made to be 9 parts by mass; 0 . 3 parts by mass of a fluorochemical surfactant (product name "Surflon S-393" , made by AGC SEIMI CHEMICAL CO. , LTD.) were added, as a surfactant, to the partially-polymerized monomer syrup after the hollow glass balloon was added; and further bubbles were mixed such that the content thereof became approximately 20% by volume, based on the whole volume of the pressure-sensitive adhesive composition.

(Comparative Example 2)

A pressure-sensitive adhesive sheet of Comparative Example 2 was obtained by the same components and manufacturing method as those in Example 1, except that: the parts by mass of each of the 2-ethylhexyl acrylate and the acrylic acid were made to be 75 parts by mass and 25 parts by mass, respectively; the cross-linking agent and the parts by mass thereof were made to be 1,6-hexanediol diacrylate (HDDA) and 0.07 parts by mass; and the parts by mass of the hollow glass balloon were made to be 9 parts by mass.

The blending amount of each material in the pressure-sensitive adhesive composition of each of Examples 1 to 6 and Comparative Examples 1 and 2 is shown in Table 1.

[Measurement of 100% Modulus]

The 100% modulus of the pressure-sensitive adhesive layer in the pressure-sensitive adhesive sheet of each of Examples and Comparative Examples was measured according to JIS K 6251. Specifically, each pressure-sensitive adhesive sheet was punched out so as to have a dumbbell-shaped test specimen No. 3 shape, which was used as a sample for evaluation. Tensile strength [N/cm$^2$] and elongation [%] were measured by using a universal testing machine ("TG-1KNB", made by Minebea Co., Ltd.), under a condition in which an original length (measurement length) was 20 mm, the width of the sample was 5 mm, and a tensile speed was 500 mm/min. The tests were performed three times for each specimen, and the average thereof was assumed to be each measured value. The 100% modulus [N/cm$^2$] was read from a stress-strain curve. The results are shown in Table 1.

[Evaluation of Reworkability]

The pressure-sensitive adhesive sheet of each of Examples and Comparative Examples was cut into a piece having a size of 15 mm in width x 120 mm in length to produce a test specimen. A stainless plate (SUS 304 BA plate) was provided as an adherend, which was cleaned with isopropyl alcohol (IPA). The test specimen of each of Examples and Comparative Examples was attached to this stainless plate by one-way pressure bonding with a 1-kg roller. At the time, an area within one end of the test specimen to a distance of 100 mm was attached to the stainless plate. An area within the other end of the test specimen to a distance of 20 mm was used as a grip portion when the later-described 45°-releasing test was performed. The separator was released from the test specimen immediately after the test specimen was attached to the stainless plate. The test specimen was released from the stainless plate by pulling the other end thereof in a condition in which a tensile speed was 500 mm/min and a releasing angle was 45° (the angle formed between the area attached to the stainless plate and the grip portion was 45°), and under an environment of 23°C x 50% RH. The release of the test specimen was initiated when approximately 1 minute had passed since the test specimen was attached.

After the test specimen was released, presence/absence of a damage (break) of the test specimen was visually observed and a ratio of deformation before and after the release of the test specimen (ratio of the length of the test specimen, occurring after the release, to the length thereof (120 mm) before the release) was measured, thereby evaluating workability. The case where the test specimen was not damaged and a ratio of deformation was less than 3% was evaluated as "AAA". The case where the test specimen was not damaged and a ratio of deformation was less than 5% was evaluated as "AA". The case where the test specimen was not damaged and a ratio of deformation was less than 10% was evaluated as "A". The case where the test specimen was damaged or where a ratio of deformation was 10% or more was evaluated as "B". The results are shown in Table 1.

[90°-Releasing Pressure-Sensitive Adhesive Force Test]

The pressure-sensitive adhesive sheet of each of Examples and Comparative Examples was backed up by being attached to a surface of a polyethylene terephthalate (PET) film having a thickness of 100 micrometer, the surface having been subjected to a primer treatment. The backed-up pressure-sensitive adhesive sheet was cut into a piece having a size of 15 mm in width x 70 mm in length, which was used as a test specimen. A stainless plate (SUS 304 BA plate) was provided as an adherend, which was cleaned with isopropyl alcohol (IPA) . The separator of the test specimen of each of Examples and Comparative Examples was released, and the test specimen was attached to the stainless plate by one-way pressure bonding with a 1-kg roller. After the test specimen was attached to the stainless plate, they were aged under an atmosphere of 23°C x 50% RH for 72 hours. After the aging, the test specimen was released from the stainless plate by using a tensile tester (apparatus name "Tensilon", made by Shimadzu Corporation) under the atmosphere of 23°C x 50% RH and under a condition in which a tensile speed was 300 mm/min and a releasing angle was 90°, and at the time, a pressure-sensitive adhesive force [unit: N/15 mm] with which the test specimen was attached to the adherend was measured. The results are shown in Table 1.

[Evaluation of Adhesiveness]

The adhesiveness of the pressure-sensitive adhesive sheet of each of Examples and Comparative Examples was evaluated from the obtained pressure-sensitive adhesive force. The case where the pressure-sensitive adhesive force was 110 N/15 mm or more was evaluated as "AA". The case where the pressure-sensitive adhesive force was 60 N/15 mm or more was evaluated as "A" . The case where the pressure-sensitive adhesive force was less than 40 N/15 mm was evaluated as "B" . The results are shown in Table 1.

[Table 1]

| | | EXAMPLE 1 | EXAMPLE 2 | EXAMPLE 3 | EXAMPLE 4 | EXAMPLE 5 | EXAMPLE 6 | COMPARATIVE EXAMPLE 1 | COMPARATIVE EXAMPLE 2 |
|---|---|---|---|---|---|---|---|---|---|
| ACRYLIC POLYMER (PARTS BY MASS) 2EHA/AA | | 85/15 | 88/ 12 | 88/12 | 90/10 | 90/10 | 82/18 | 90/10 | 75/25 |
| CROSS-LINKING AGENT | TYPE | DPHA | HDDA | HDDA | HDDA | DPHA | HDDA | HDDA | HDDA |
| | ADDED NUMBER OF PARTS (PARTS BY MASS) | 0.15 | 0.2 | 0.2 | 0.07 | 0.1 | 0.07 | 0.07 | 0.07 |
| GLASS BALLOON (PARTS BY MASS) | | 15 | 12 | 12 | 9 | 9 | 9 | 9 | 9 |
| SURFACTANT (PARTS BY MASS) | | - | - | - | - | - | - | 0.3 | - |
| RATE OF BUBBLES (%BY VOLUME) | | 0 | 0 | 3 | 0 | 0 | 0 | 20 | 0 |
| 100% MODULUS ($N/cm^2$) | | 84.8 | 44.7 | 40.2 | 24.3 | 20.0 | 200.0 | 14.0 | 640.0 |
| REWORKABILITY | | AAA | AAA | AAA | AA | A | AAA | B | AAA |
| 90°-RELEASING PRESSURE-SENSITIVE ADHESIVE FORCE (N/15mm) | | 128.3 | 112.6 | 110.1 | 107.8 | 88.2 | 72.4 | 67.8 | - |
| ADHESIVENESS | | AA | AA | AA | A | A | A | A | B |

The abbreviations in Table 1 represent the following compounds.

2EHA: 2-Ethylhexyl Acrylate
AA: Acrylic Acid
DPHA: Dipentaerythritol Hexaacrylate (Hexafunctional)
HDDA: 1,6-Hexanediol Diacrylate (Bifunctional)

The content (parts by mass) of each component represents a content, based on 100 parts by mass of the whole monomer components for forming an acrylic polymer. The "-" shown in the column of the 90°-releasing pressure-sensitive adhesive force in Comparative Example 2 represents that the test specimen had no pressure-sensitive adhesive force.

As shown in Table 1, the pressure-sensitive adhesive sheet of Comparative Example 1 had good adhesiveness, but poor reworkability. The pressure-sensitive adhesive sheet of Comparative Example 1 was damaged in the releasing test for evaluating reworkability. The pressure-sensitive adhesive sheet of Comparative Example 2 had good reworkability, but poor adhesiveness. It is thought that the pressure-sensitive adhesive sheet of Comparative Example 2 had no pressure-sensitive adhesive force due to excessive cohesive force. On the other hand, the pressure-sensitive adhesive sheet of each of Examples 1 to 6 had both good reworkability and good adhesiveness. That is, it has been confirmed that the pressure-sensitive adhesive sheet of each of Examples 1 to 6 has both adhesiveness and reworkability.

In particular, the pressure-sensitive adhesive sheet of Example 4 having 100% modulus of 23 N/cm$^2$ or more exerted better reworkability than that of the pressure-sensitive adhesive sheet of Example 5 having 100% modulus of less than 23 N/cm$^2$. In addition, the pressure-sensitive adhesive sheet of each of Examples 1 to 3 having 100% modulus of 30 N/cm$^2$ or more exerted still better reworkability than that of the pressure-sensitive adhesive sheet of Example 4 having 100% modulus of less than 30 N/cm$^2$. In addition, the pressure-sensitive adhesive sheet of each of Examples 1 to 3 in which the content of the acrylic acid, as the polar group-containing monomer (B), was 12 parts by mass or more exerted better adhesiveness than that of the pressure-sensitive adhesive sheet of each of Examples 4 and 5 and Comparative Example 1. Accordingly, it has been confirmed that the pressure-sensitive adhesive sheet of each of Examples 1 to 3 has both adhesiveness and reworkability at a higher level.

The preferred embodiments described above will be summarized below.

(Item 1) A pressure-sensitive adhesive sheet comprising a pressure-sensitive adhesive layer including an acrylic polymer, in which the acrylic polymer contains, as monomer components, an acrylic monomer not containing a polar group (A) and a polar group-containing monomer (B), and in which 100% modulus of the pressure-sensitive adhesive layer is 20 to 200 N/cm$^2$ .

(Item 2) The pressure-sensitive adhesive sheet according to Item 1, in which the content of the polar group-containing monomer (B) is 5 parts by mass or more, based on 100 parts by mass of the whole monomer components for forming the acrylic polymer.

(Item 3) The pressure-sensitive adhesive sheet according to Item 1 or Item 2, in which the polar group-containing monomer (B) is a carboxyl group-containing monomer.

(Item 4) The pressure-sensitive adhesive sheet according to any one of Items 1 to 3, in which the pressure-sensitive adhesive layer contains a fine particle.

(Item 5) The pressure-sensitive adhesive sheet according to Item 4, in which the content of the fine particle is 5 parts by mass or more, based on 100 parts by mass of the whole monomer components for forming the acrylic polymer.

(Item 6) The pressure-sensitive adhesive sheet according to any one of Items 1 to 5, in which the content of a bubble in the pressure-sensitive adhesive layer is 10% by volume or less, based on the whole volume of the pressure-sensitive adhesive layer.

(Item 7) A pressure-sensitive adhesive composition including an acrylic polymer, in which the acrylic polymer contains, as monomer components, an acrylic monomer not containing a polar group (A) and a polar group-containing monomer (B), and in which, when a pressure-sensitive adhesive layer is formed, 100% modulus of the pressure-sensitive adhesive layer is 20 to 200 N/cm$^2$.

## Claims

**1.** A pressure-sensitive adhesive sheet comprising a pressure-sensitive adhesive layer including:

a) an acrylic polymer which contains, as monomer components, an acrylic monomer selected from a (meth)acrylic acid alkyl ester, a (meth)acrylic acid ester having an alicyclic hydrocarbon group, a (meth)acrylic acid ester having an aromatic hydrocarbon group, and a (meth)acrylic acid ester obtained from an alcohol derived from a terpene compound and a monomer selected from the group consisting of carboxyl group-containing monomers, hydroxyl group-containing monomers, amido group-containing monomers, amino group-containing monomers, glycidyl group-containing monomers, cyano group-containing monomers, heterocycle-containing vinyl monomers, and combinations of two or more thereof;
b) fine particles **characterized by** an average particle size of 1 to 500 μm, measured by laser diffractometry using a Coulter particle size measuring apparatus, and whose content is 5 parts by mass or more, based on 100 parts by mass of the whole monomer components for forming the acrylic polymer; and
c) bubbles, the content of the bubbles in the pressure-sensitive adhesive layer being 10% by volume or less, based on the whole volume of the pressure-sensitive adhesive layer,
wherein the 100% modulus of the pressure-sensitive adhesive layer is 20 to 200 N/cm$^2$, measured according to JIS K 6251.

**2.** The pressure-sensitive adhesive sheet according to claim 1, wherein the content of the monomer selected from the group consisting of carboxyl group-containing monomers, hydroxyl group-containing monomers, amido group-containing monomers, amino group-containing monomers, glycidyl group-containing monomers, cyano group-containing monomers, heterocycle-containing vinyl monomers, and combinations of two or more thereof is 5 parts by mass or more, based on 100 parts by mass of the whole monomer components for forming the acrylic polymer.

**3.** A pressure-sensitive adhesive composition including:

a) an acrylic polymer which contains, as monomer components, an acrylic monomer selected from a (meth)acrylic acid alkyl ester, a (meth)acrylic acid ester having an alicyclic hydrocarbon group, a (meth)acrylic acid ester having an aromatic hydrocarbon group, and a (meth)acrylic acid ester obtained from an alcohol derived from a terpene compound and a monomer selected from the group consisting of carboxyl group-containing monomers, hydroxyl group-containing monomers, amido group-containing monomers, amino group-containing monomers, glycidyl group-containing monomers, cyano group-containing monomers, heterocycle-containing vinyl monomers, and combinations of two or more thereof;
b) fine particles **characterized by** an average particle size of 1 to 500 μm, measured by laser diffractometry using a Coulter particle size measuring apparatus, and whose content is 5 parts by mass or more, based on 100 parts by mass of the whole monomer components for forming the acrylic polymer; and
c) bubbles, the content of the bubbles in the pressure-sensitive adhesive layer being 10% by volume or less, based on the whole volume of the pressure-sensitive adhesive composition,
wherein when a pressure-sensitive adhesive layer is formed, the 100% modulus of the pressure-sensitive adhesive layer is 20 to 200 N/cm$^2$, measured according to JIS K 6251.

## Patentansprüche

**1.** Haftklebefolie umfassend eine Haftklebstoffschicht enthaltend:

a) ein Acrylpolymer, welches als Monomerkomponenten ein Acrylmonomer, ausgewählt aus einem (Meth)acrylsäure-alkylester, einem (Meth)acrylsäureester mit einer alicyclischen Kohlenwasserstoffgruppe, einem (Meth)acrylsäureester mit einer aromatischen Kohlenwasserstoffgruppe, und einem (Meth)acrylsäureester, der von einem von einer Terpenverbindung abgeleiteten Alkohol erhalten wird, und ein Monomer, ausgewählt aus der Gruppe bestehend aus eine Carboxylgruppe enthaltenden Monomeren, eine Hydroxylgruppe enthaltenden Monomeren, eine Amidogruppe enthaltenden Monomeren, eine Aminogruppe enthaltenden Monomeren, eine Glycidylgruppe enthaltenden Monomeren, eine Cyanogruppe enthaltenden Monomeren, einen Heterocyclus enthaltenden Vinylmonomeren, und Kombinationen von zwei oder mehr von diesen, enthält;
b) feine Partikel, **gekennzeichnet durch** eine mittlere Partikelgröße von 1 bis 500 μm, gemessen **durch** Laserdiffraktometrie unter Verwendung eines Coulter-Partikelgrößenmessgeräts, und deren Gehalt 5 Massenteile oder mehr, bezogen auf 100 Massenteile der gesamten Monomerkomponenten zum Bilden des Acrylpolymers, beträgt; und
c) Blasen, wobei der Gehalt der Blasen in der Haftklebstoffschicht 10 Vol.-% oder weniger, bezogen auf das gesamte Volumen der Haftklebstoffschicht, beträgt,
wobei der 100%-Modul der Haftklebstoffschicht 20 bis 200 N/cm$^2$ beträgt, gemessen gemäß JIS K 6251.

**2.** Haftklebefolie gemäß Anspruch 1, wobei der Gehalt des Monomers, ausgewählt aus der Gruppe bestehend aus eine Carboxylgruppe enthaltenden Monomeren, eine Hydroxylgruppe enthaltenden Monomeren, eine Amidogruppe enthaltenden Monomeren, eine Aminogruppe enthaltenden Monomeren, eine Glycidylgruppe enthaltenden Monomeren, eine Cyanogruppe enthaltenden Monomeren, einen Heterocyclus enthaltenden Vinylmonomeren und Kombinationen von zwei oder mehr von diesen, 5 Massenteile oder mehr, bezogen auf 100 Massenteile der gesamten Monomerkomponenten zum Bilden des Acrylpolymers, beträgt.

**3.** Haftklebstoffzusammensetzung enthaltend:

a) ein Acrylpolymer, welches als Monomerkomponenten ein Acrylmonomer, ausgewählt aus einem (Meth)acrylsäure-alkylester, einem (Meth)acrylsäureester mit einer alicyclischen Kohlenwasserstoffgruppe, einem (Meth)acrylsäureester mit einer aromatischen Kohlenwasserstoffgruppe, und einem (Meth)acrylsäureester, der von einem von einer Terpenverbindung abgeleiteten Alkohol erhalten wird, und ein Monomer, ausgewählt aus der Gruppe bestehend aus eine Carboxylgruppe enthaltenden Monomeren, eine Hydroxylgruppe enthaltenden Monomeren, eine Amidogruppe enthaltenden Monomeren, eine Aminogruppe enthaltenden Monomeren, eine Glycidylgruppe enthaltenden Monomeren, eine Cyanogruppe enthaltenden Monomeren, einen Heterocyclus enthaltenden Vinylmonomeren, und Kombinationen von zwei oder mehr von diesen, enthält;
b) feine Partikel, **gekennzeichnet durch** eine mittlere Partikelgröße von 1 bis 500 $\mu$m, gemessen **durch** Laserdiffraktometrie unter Verwendung eines Coulter-Partikelgrößenmessgeräts, und deren Gehalt 5 Massenteile oder mehr, bezogen auf 100 Massenteile der gesamten Monomerkomponenten zum Bilden des Acrylpolymers, beträgt; und
c) Blasen, wobei der Gehalt der Blasen in der Haftklebstoffschicht 10 Vol.-% oder weniger, bezogen auf das gesamte Volumen der Haftklebstoffzusammensetzung, beträgt,
wobei, wenn eine Haftklebstoffschicht gebildet wird, der 100%-Modul der Haftklebstoffschicht 20 bis 200 N/cm$^2$ beträgt, gemessen gemäß JIS K 6251.

## Revendications

**1.** Feuille adhésive sensible à la pression comprenant une couche adhésive sensible à la pression incluant :

a) un polymère acrylique qui contient, comme constituants monomères, un monomère acrylique choisi parmi un ester alkylique d'acide (méth)acrylique, un ester d'acide (méth)acrylique présentant un groupe hydrocarboné alicyclique, un ester d'acide (méth)acrylique présentant un groupe hydrocarboné aromatique, et un ester d'acide (méth)acrylique obtenu à partir d'un alcool dérivé d'un composé de terpène et d'un monomère choisi dans le groupe constitué de monomères contenant un groupe carboxyle, de monomères contenant un groupe hydroxyle, de monomères contenant un groupe amido, de monomères contenant un groupe amino, de monomères contenant un groupe glycidyle, de monomères contenant un groupe cyano, de monomères vinyliques contenant un hétérocycle, et de combinaisons de deux ou plusieurs d'entre eux ;
b) de fines particules **caractérisées par** une taille moyenne de particule de 1 à 500 $\mu$m, mesurée par une diffractométrie au laser utilisant un appareil de mesure de taille de particule Coulter, et dont la teneur est de 5 parties en masse ou supérieure, rapportée à 100 parties en masse de tous les constituants monomères pour former le polymère acrylique ; et
c) des bulles, la teneur des bulles dans la couche adhésive sensible à la pression étant de 10 % en volume ou inférieure, rapportée au volume total de la couche adhésive sensible à la pression,
dans laquelle le module à 100 % de la couche adhésive sensible à la pression est de 20 à 200 N/cm$^2$, mesuré selon JIS K 6251.

**2.** Feuille adhésive sensible à la pression selon la revendication 1, dans laquelle la teneur du monomère choisi dans le groupe constitué de monomères contenant un groupe carboxyle, de monomères contenant un groupe hydroxyle, de monomères contenant un groupe amido, de monomères contenant un groupe amino, de monomères contenant un groupe glycidyle, de monomères contenant un groupe cyano, de monomères vinyliques contenant un hétérocycle, et de combinaisons de deux ou plusieurs d'entre eux est de 5 parties en masse ou supérieure, rapportée à 100 parties en masse de tous les constituants monomères pour former le polymère acrylique.

**3.** Composition adhésive sensible à la pression comprenant :

a) un polymère acrylique qui contient, comme constituants monomères, un monomère acrylique choisi parmi un ester alkylique d'acide (méth)acrylique, un ester d'acide (méth)acrylique présentant un groupe hydrocarboné alicyclique, un ester d'acide (méth)acrylique présentant un groupe hydrocarboné aromatique, et un ester d'acide (méth)acrylique obtenu à partir d'un alcool dérivé d'un composé de terpène et d'un monomère choisi dans le groupe constitué de monomères contenant un groupe carboxyle, de monomères contenant un groupe hydroxyle, de monomères contenant un groupe amido, de monomères contenant un groupe amino, de monomères contenant un groupe glycidyle, de monomères contenant un groupe cyano, de monomères vinyliques contenant un hétérocycle, et de combinaisons de deux ou plusieurs d'entre eux ;

b) de fines particules **caractérisées par** une taille moyenne de particule de 1 à 500 μm, mesurée par une diffractométrie au laser utilisant un appareil de mesure de taille de particule Coulter, et dont la teneur est de 5 parties en masse ou supérieure, rapportée à 100 parties en masse de tous les constituants monomères pour former le polymère acrylique ; et

c) des bulles, la teneur des bulles dans la couche adhésive sensible à la pression étant de 10 % en volume ou inférieure, rapportée au volume total de la composition adhésive sensible à la pression,

dans laquelle lorsqu'une couche adhésive sensible à la pression est formée, le module à 100 % de la couche adhésive sensible à la pression est de 20 à 200 $N/cm^2$, mesuré selon JIS K 6251.

FIG.1

10
12
14
20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2345708 A
- JP 57017030 A